(19) Europäisches Patentamt
European Patent Office
Office européen des brevets

(11) **EP 4 613 463 A1**

(12) **EUROPEAN PATENT APPLICATION**
published in accordance with Art. 153(4) EPC

(43) Date of publication:
**10.09.2025 Bulletin 2025/37**

(51) International Patent Classification (IPC):
**B29C 65/20** (2006.01)     **H01M 50/105** (2021.01)
**B29C 65/00** (2006.01)     **B29L 31/00** (2006.01)

(21) Application number: **23907771.2**

(52) Cooperative Patent Classification (CPC):
**B29C 65/00; B29C 65/20; H01M 50/105;**
B29L 2031/00

(22) Date of filing: **20.12.2023**

(86) International application number:
**PCT/KR2023/021174**

(87) International publication number:
**WO 2024/136488 (27.06.2024 Gazette 2024/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **22.12.2022 KR 20220181898**

(71) Applicant: **LG Energy Solution, Ltd.
Seoul 07335 (KR)**

(72) Inventors:
• **SHIN, Ji Hyun
  Daejeon 34122 (KR)**
• **KIM, Jin Hyung
  Daejeon 34122 (KR)**
• **KIM, Mi Na
  Daejeon 34122 (KR)**

(74) Representative: **Goddar, Heinz J.
Boehmert & Boehmert
Anwaltspartnerschaft mbB
Pettenkoferstrasse 22
80336 München (DE)**

(54) **SEALING DEVICE**

(57)     The present invention relates to a sealing device, and a sealing device according to one embodiment of the present invention may include a sealer which has a pressing surface, which presses the target object, and applies heat to the target object and a plurality of temperature sensors which are mounted in the sealer and spaced different distances from the pressing surface.

FIG.4

EP 4 613 463 A1

## Description

### [TECHNICAL FIELD]

CROSS-REFERENCE TO RELATED APPLICATIONS

This application claims priority to and the benefit of Korean Patent Application No. 10-2022-0181898, filed on December 22, 2022, the disclosure of which is incorporated herein by reference in its entirety.

TECHNICAL FIELD

The present invention relates to a sealing device.

### [BACKGROUND ART]

Recently, secondary batteries are attracting attention as power sources for electric vehicles (EVs) and hybrid electric vehicles (HEVs), which are proposed as solutions for air pollution from existing gasoline vehicles and diesel vehicles using fossil fuels. One of the most popular secondary batteries among currently commercialized secondary batteries is the lithium secondary battery, and lithium secondary batteries may be classified into can type secondary batteries, prismatic type secondary batteries, and pouch type secondary batteries according to the shape of the exterior material. Among the secondary batteries, the pouch type secondary batteries are widely used in medium and large battery modules due to their high energy density and ease of stacking.

In a pouch type battery, factors such as the insulation and sealing of a sealing part of a pouch are directly linked to the stability of the battery. In order to improve the durability of the sealing part of the pouch, it is important to accurately control the sealing conditions of the pouch in a pouch manufacturing process. In particular, among the sealing conditions of the pouch, a temperature of a sealing device in contact with an outer surface of the pouch is one of the most important factors in a pouch sealing process. In the case of the conventional sealing apparatus for sealing a pouch, only a single temperature sensor is mounted, and thus there is a limitation that a temperature of the sealing apparatus actually in contact with the outer surface of the pouch may not be accurately determined. Accordingly, a pouch sealing apparatus capable of more accurately determining the temperature of a contact surface in contact with an outer surface of a pouch is required.

The above-described background art is possessed or acquired by the inventor in a process of deriving the content of the present invention and may not necessarily be considered as known technology disclosed to the general public before this application.

### [DISCLOSURE]

### [TECHNICAL PROBLEM]

Accordingly, the present invention is directed to providing a sealing device capable of obtaining an accurate temperature of a pouch pressing surface in contact with an outer surface of a pouch to seal the pouch.

The present invention is also directed to providing a sealing device capable of significantly improving the sealing quality of a pouch by obtaining an accurate temperature of a pressing surface in contact with the pouch.

### [TECHNICAL SOLUTION]

One aspect of the present invention provides a sealing device including a sealer which has a pressing surface, which presses the target object, and applies heat to the target object and a plurality of temperature sensors which are mounted in the sealer and spaced different distances from the pressing surface.

The sealing device may further include a processor which calculates a temperature of the pressing surface on the basis of temperatures detected by the plurality of temperature sensors.

The sealer may be provide at each of both sides of the target object.

The sealer may include a contact portion including the pressing surface and a body portion which is fastened to the contact portion and transfers heat to the contact portion.

The plurality of temperature sensors may be provided in the body portion.

The plurality of temperature sensors may include a first sensor which is disposed at a first position of the sealer and detects a temperature of the body portion at the first position and a second sensor which is disposed at a second position of the body portion closer to the contact portion than the first position and detects a temperature of the body portion at the second position.

The first sensor and the second sensor may overlap in a direction perpendicular to the pressing surface.

The plurality of temperature sensors may be disposed to be spaced apart from each other.

The plurality of temperature sensors may extend from one end portion of the sealer toward the inside of the sealer.

At least some of the plurality of sensors may have the same size and shape.

The contact portion may be fastened to the body portion to be replaceable.

The contact portion and the body portion may be formed of the same material.

A temperature of the contact portion in contact with the target object may be obtained by the plurality of temperature sensors by detecting a temperature of the body portion.

**[ADVANTAGEOUS EFFECTS]**

A sealing device according to one embodiment of the present invention can obtain an accurate temperature of a pouch pressing surface in contact with an outer surface of a pouch to seal the pouch.

A sealing device according to one embodiment of the present invention can significantly improve the sealing quality of a pouch by obtaining an accurate temperature of a pressing surface in contact with the pouch.

In addition, effects of the present invention may include effects easily predicted by those skilled in the art from configurations according to embodiments of the present invention.

**[DESCRIPTION OF DRAWINGS]**

FIG. 1 is a schematic view illustrating a sealing device according to a comparative example.

FIG. 2 is a schematic view illustrating a sealing device according to a first embodiment of the present invention.

FIG. 3 is a schematic view illustrating a sealing device including a plurality of sealers according to the first embodiment of the present invention.

FIG. 4 is a schematic view illustrating a sealing device according to a second embodiment of the present invention.

**[MODES OF THE INVENTION]**

Hereinafter, exemplary embodiments of the present invention will be described in detail with reference to the accompanying drawings to be easily carried out by those skilled in the art. The following description is one of various aspects, and when the embodiments are described, the specific description of well-known functions or configurations will be omitted in order to clearly describe the gist of the present invention.

In the present specification, when reference numerals are assigned to components of each drawing, the same or similar components are assigned the same or similar reference numerals throughout the specification. A component in one embodiment having a function in common with a component included in another embodiment will be described with the same name. Terms and words used in the present specification and claims should not be interpreted as being limited to commonly used meanings or meanings in dictionaries and should be interpreted as having meanings and concepts which are consistent with the technological scope of the present invention based on the principle that inventors have appropriately defined concepts of the terms in order to describe the present invention in the best way.

In addition, the present invention is not limited to the embodiments and may be variously modified and changed from the description by those skilled in the art. Therefore, the spirit of the invention is defined not by the detailed description of the invention but by the appended claims, and encompasses all modifications and equivalents that fall within the scope of the appended claims.

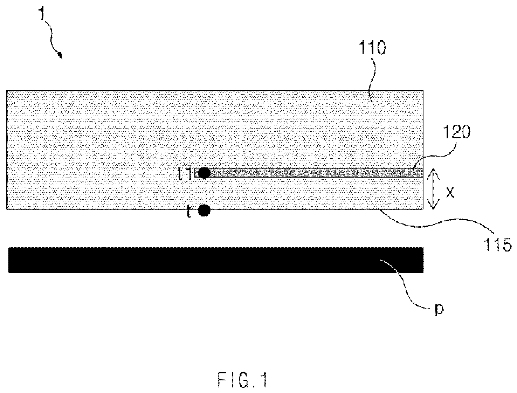

FIG. 1 is a schematic view illustrating a sealing device 1 according to a comparative example.

Referring to FIG. 1, the sealing device 1 may include a sealer 110 and a temperature sensor 120.

A target object sealed by the sealing device 1 may include a pouch type secondary battery. Hereinafter, a case in which the sealing target object is a pouch will be described, but the type of target object is not limited to the pouch.

The sealer 110 may be in contact with an outer surface of a pouch p to seal one surface of the pouch in contact therewith. The sealer 110 may include a pressing surface 115 which is in contact with the outer surface of the pouch p and heats the pouch p.

The temperature sensor 120 may be mounted in the sealer 110. The temperature sensor 120 may be disposed to be spaced a preset distance x from the pressing surface 115 in a direction perpendicular to the pressing surface 115. The temperature sensor 120 may detect a temperature of one portion of the sealer 110 which heats the pouch p. In this case, a temperature $t1$ of the one portion of the sealer 110 detected by the single temperature sensor 120 disposed in the sealer 110 may be different from a temperature $t$ of the pressing surface 115 of the sealer in contact with the pouch p. This may be due to the heat generated by the sealer 110 being emitted to the outside and heat loss from the pouch p. In other words, since the temperature distribution of the sealer 110 may not be obtained from one piece of temperature data measured by the single temperature sensor 120 mounted on the sealer 110, an accurate temperature of the pressing surface 115 actually used to seal the pouch p may not be obtained, and thus sealing quality may be greatly degraded in a sealing process.

<u>First Embodiment</u>

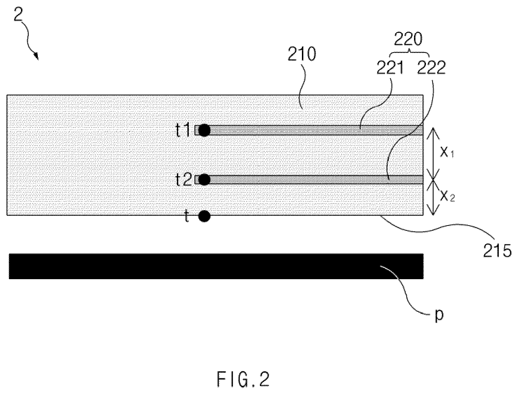

FIG. 2 is a schematic view illustrating a sealing device 2 according to a first embodiment of the present invention.

Referring to FIG. 2, the sealing device 2 according to the first embodiment of the present invention may include a sealer 210 and a temperature sensor 220.

The sealer 210 may be in contact with one surface of a pouch p to seal the pouch. The sealer 210 may transfer heat to the one surface of the pouch p in contact therewith to seal the pouch. The sealer 210 may transfer heat through conduction. The sealer 210 may be provided with a pressing surface 215 for sealing the pouch p. The pressing surface 215 may be provided at one end portion of the sealer 210. The pressing surface 215 may be provided at one outer side surface of the sealer 210. The pressing surface 215 may be in contact with the one surface of the pouch p. The pressing surface 215 may be set to a preset temperature t to transfer heat to the one surface of the pouch p in contact therewith. The set temperature t of the pressing surface 215 may be controlled as necessary. For example, the temperature t of the pressing surface 215 may be set differently according to a material and a thickness of the pouch p.

The temperature sensor 220 may be formed in one portion of the sealer 210. The temperature sensor 220 may be mounted on the sealer 210. The temperature sensor 220 may be fixedly fastened to the sealer 210. A sensor frame (not shown) for mounting the temperature sensor 220 may be formed on the sealer 210. For example, the temperature sensor 220 may be inserted into the sealer 210 from a side surface of the sealer 210 and fastened to the sealer 210.

The temperature sensor 220 may be provided as a plurality of temperature sensors 220. The temperature sensors 220 may include a first sensor 221 and a second sensor 222. The first sensor 221 and the second sensor 222 may be disposed to be spaced apart from each other. The first sensor 221 and the second sensor 222 may extend from one end portion of the sealer 210 toward the inside of the sealer 210. For example, an exterior of each of the first sensor 221 and the second sensor 222 may be formed in a longitudinal rectangular shape. The first sensor 221 and the second sensor 222 may be disposed in the sealer 210 to be parallel to the pressing surface 215. The first sensor 221 may be disposed at a first position of the sealer 210. In this case, the first position may be a position spaced a preset distance from the pressing surface 215 in a direction perpendicular to the pressing surface 215, and the first sensor 221 may be disposed parallel to the pressing surface 215 at the first position. The second sensor 222 may be disposed at a second position closer to the pressing surface 215 than the first position. The second sensor 222 may be disposed parallel to the pressing surface 215 like the first sensor 221. The first position may be spaced a first distance $x1$ from the second position. In other words, the second sensor 222 may be disposed the first distance $x1$ closer to the pressing surface 215 than the first sensor 221. The first sensor 221 may be disposed to be spaced the first distance $x1$ from the second sensor 222. The second position at which the second sensor 222 is disposed may be a position spaced a second distance $x2$ from the pressing surface 215 in the direction perpendicular to the pressing surface 215. That is, the second sensor 222 may be disposed in one portion in the sealer 210 spaced the second distance $x2$ from the pressing surface 215, and the first sensor 221 may be disposed on the other portion in the sealer 210 spaced a distance equal to the first distance $x1$ plus the second distance $x2$ from the pressing surface 215.

The first sensor 221 and the second sensor 222 may have the same size and shape. The first sensor 221 and the second sensor 222 may be positioned to overlap in the direction perpendicular to the pressing surface 215. In addition, as described above, the pressing surface 215, the first sensor 221, and the second sensor 222 may all be arranged to be parallel. By adopting such a configuration, a temperature gradient of the sealer 210 in the direction perpendicular to the pressing surface 215 may be more easily obtained on the basis of a temperature at the first position detected by the first sensor 221 and a temperature at the second position detected by the second sensor 222.

The pressing surface 215 should be set to a reference temperature t so that the pressing surface 215 may come into contact with the one surface of the pouch p and seal the pouch p. The reference temperature t of the pressing surface 215 may be controlled to an appropriate value according to variables such as the material and thickness of the pouch.

The sealing device 2 according to the first embodiment of the present invention may further include a processor (not shown) capable of obtaining the reference temperature t on the basis of a temperature $t1$ at the first position detected by the first sensor 221 and a temperature $t2$ at the second position detected by the second sensor 222. The first sensor 221 and the second sensor 222 may detect the temperature $t1$ at the first position and the temperature $t2$ at the second position, respectively. The first sensor 221 and the second sensor 222 may transmit the temperatures $t1$ and $t2$ detected at the first position and the second position to the processor. The processor may predict the reference temperature of the pressing surface 215 using the received temperature $t1$ at the first position and the received temperature $t2$ at the second position. As described above, since heat may be transferred through conduction in the sealer 210, the transfer of heat generated by the sealer 210 may satisfy a thermal conductivity equation such as [Equation 1] below.

$$[\text{Equation 1}]$$

$$Q = kA \, dT/dX$$

Here, k may be a thermal conductivity proportionality constant of a component material forming the sealer 210 (for example, a metal containing copper at a content of 98%), A may be an area of the pressing surface 215 in contact with the pouch p, X may be a distance from the pressing surface 215 in a vertical direction, and T may be a temperature.

Since each of the first position at which the first sensor 221 is disposed and the second position at which the second sensor 222 is disposed is spaced a preset distance from the pressing surface 215 to be parallel in the direction perpendicular to the pressing surface 215, the reference temperature of the pressing surface 215 may be obtained through a process of solving a simple proportional equation, and the processor may perform a process of obtaining the reference temperature. For example, the processor may be in a state of being electrically connected to the first sensor 221 and the second sensor 222. The processor may be electrically connected to the first sensor 221 and the second sensor 222 and may receive the temperature t1 at the first position and the temperature t2 at the second position from the first sensor 221 and the second sensor 222 in real time. The processor may receive the temperature t1 at the first position and the temperature t2 at the second position and calculate the reference temperature t of the pressing surface 215 in real time. For example, the processor may include a user display which visually displays the calculated reference temperature of the pressing surface 215.

By adopting such a configuration, the sealing device 2 according to the first embodiment of the present invention can calculate an accurate temperature of the pressing surface 215 of the sealer 21 in contact with the pouch p. Accordingly, the sealing quality and durability of the pouch p which is sensitive to a temperature of the pressing surface 215 can be significantly improved.

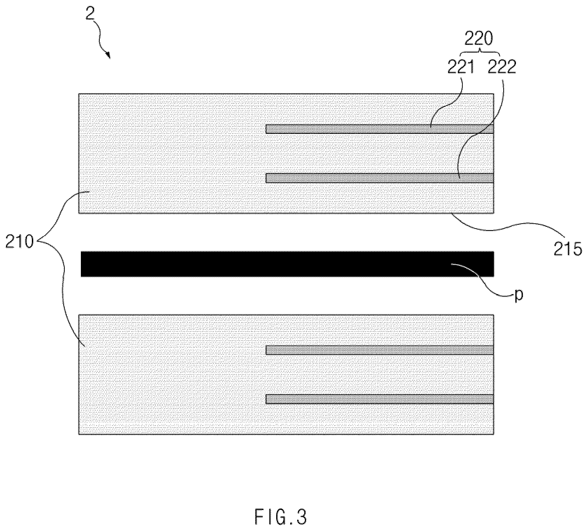

FIG. 3 is a schematic view illustrating a sealing device 2 including a plurality of sealers 210 according to the first embodiment of the present invention.

Referring to FIG. 3, the sealing device 2 according to the first embodiment of the present invention may include the plurality of sealers 210. Specifically, the sealing device 2 may include a pair of sealers 210 provided at both sides of the pouch p. The sealers 210 may be provided to seal one side surface and the other side surface of the pouch p. The pressing surface 215 and the sensor 220 may be provided in each of the sealers 210. The sensor 220 provided in each of the pair of sealers 210 may include the first sensor 221 and the second sensor 222. The pair of sealers 210 may be symmetrically disposed at both sides of the pouch p with respect to the pouch p.

Second Embodiment

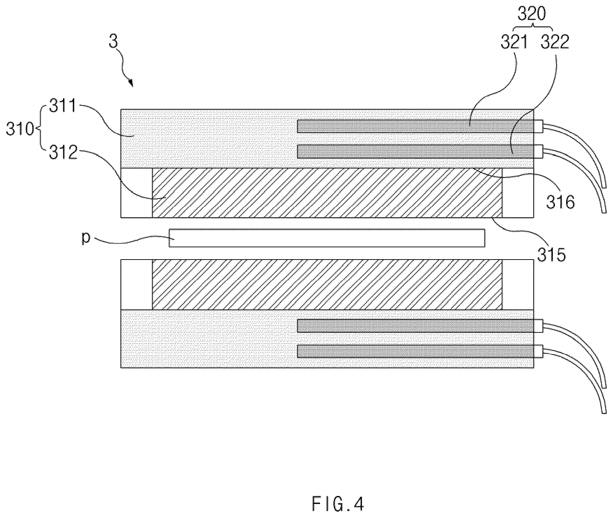

FIG. 4 is a schematic view illustrating a sealing device 3 according to a second embodiment of the present invention.

The second embodiment of the present invention may be different from the first embodiment in that a sealer 310 may be divided into a body portion 311 and a contact portion 312. The common content with the first embodiment will be omitted as much as possible, and the content of the second embodiment which is different from that of the first embodiment will be mainly described.

Referring to FIG. 4, the sealing device 3 according to the second embodiment of the present invention may include the sealer 310 and a temperature sensor 320.

The sealer 310 may be provided as a plurality of sealers 310. The sealer 310 may be provided as a pair of sealers 310 and positioned at each of both sides of a pouch p.

The sealer 310 may include the body portion 311 and the contact portion 312.

The contact portion 312 may include a pressing surface 315 in contact with one surface of the pouch p to seal the pouch p. The contact portion 312 may be fastened to the body portion 311. The contact portion 312 may be separated from the body portion 311. The contact portion 312 may be removed from the body portion 311 and replaced according to a shape and a size of the pouch p. That is, the contact portion 312 may be fastened to the body portion to be replaceable. The contact portion 312 may receive heat from the body portion 311 to heat the pressing surface 315 provided on the contact portion 312 to a preset temperature.

The body portion 311 may be fastened to the contact portion 312 and transfer heat to the contact portion 312. The temperature sensor 320 may be formed in the body portion 311. The temperature sensor 320 may include a first sensor 321 and a second sensor 322. The first sensor 321 may be provided at a first position of the body portion 311, and the second sensor 322 may be provided at a second position of the body portion 311. The second position may be a position closer to the contact portion 312 than the first position. The first sensor 321 may detect a temperature of the body portion 311 at the first position, and the second sensor 322 may detect a temperature of the body portion 311 at the second position spaced apart from the first position of the body portion 311. The first sensor 321 and the second sensor 322 may be positioned to overlap in a direction perpendicular to the pressing surface 315. A temperature of a fastening surface 316 of the body portion fastened to the contact portion 312 may be obtained on the basis of temperature data detected by the first sensor 321 and the second sensor 322, and then, a temperature of the pressing surface 315 of the contact portion 312 may be obtained. That is, the temperature of the pressing surface 315 of the contact portion 312 in contact with the pouch p may be obtained by the first sensor 321 and the second sensor 322 by detecting the temperature of the body portion 311. The sealing device 3 may further include a processor (not shown) which calculates a temperature of the pressing surface 315 using the detected temperature data.

The body portion 311 and the contact portion 312 may be formed of the same material. Since the body portion 311 and the contact portion 312 are formed of the same material, it may be more easy to obtain a temperature gradient throughout the sealer 310.

According to the present invention, a secondary battery pack including a plurality of secondary battery modules reviewed above may be provided.

In the above description, although the present invention has been described with reference to limited embodiments and drawings, the above description is only an illustrative description of the technical spirit of the present invention, and various changes and modifications may be made by those skilled in the art without departing from the essential characteristics of the present invention.

Therefore, the embodiments disclosed in the present invention are for only describing and not for limiting the spirit of the present invention, and the scope of the spirit of the present invention is not limited by the embodiments. It should be interpreted that the scope of the invention is defined by the appended claims and encompasses all modifications and equivalents that fall within the scope of the appended claims.

[Reference Numerals]

1: SEALING DEVICE
110: SEALER
115: PRESSING SURFACE
120: SENSOR
2: SEALING DEVICE
210: SEALER
215: PRESSING SURFACE
220: TEMPERATURE SENSOR
221: FIRST SENSOR
222: SECOND SENSOR
3: SEALING DEVICE
310: SEALER
311: BODY PORTION
312: CONTACT PORTION
315: PRESSING SURFACE
316: FASTENING SURFACE
320: TEMPERATURE SENSOR
321: FIRST SENSOR
322: SECOND SENSOR
t: REFERENCE TEMPERATURE
t1: TEMPERATURE AT FIRST POSITION
t2: TEMPERATURE AT SECOND POSITION
p: POUCH

**Claims**

1. A sealing device, which seals a target object, comprising:

   a sealer which has a pressing surface, which presses the target object, and applies heat to the target object; and
   a plurality of temperature sensors which are mounted in the sealer and spaced different distances from the pressing surface.

2. The sealing device of claim 1, further comprising a processor which calculates a temperature of the pressing surface on the basis of temperatures detected by the plurality of temperature sensors.

3. The sealing device of claim 1, wherein the sealer is provide at each of both sides of the target object.

4. The sealing device of claim 1, wherein the sealer includes:

   a contact portion including the pressing surface; and
   a body portion which is fastened to the contact portion and transfers heat to the contact portion.

5. The sealing device of claim 4, wherein the plurality of temperature sensors are provided in the body portion.

6. The sealing device of claim 4, wherein the plurality of temperature sensors include:

   a first sensor which is disposed at a first position of the sealer and detects a temperature of the body portion at the first position; and
   a second sensor which is disposed at a second position of the body portion closer to the contact portion than the first position and detects a temperature of the body portion at the second position.

7. The sealing device of claim 6, wherein the first sensor and the second sensor overlap in a direction perpendicular to the pressing surface.

8. The sealing device of claim 1, wherein the plurality of temperature sensors are disposed to be spaced apart from each other.

9. The sealing device of claim 1, wherein the plurality of temperature sensors extend from an outer circumference of the sealer toward an inside of the sealer.

10. The sealing device of claim 1, wherein at least some of the plurality of sensors have the same size and shape.

11. The sealing device of claim 4, wherein the contact portion is fastened to the body portion to be replaceable.

12. The sealing device of claim 4, wherein the contact portion and the body portion are formed of the same material.

13. The sealing device of claim 5, wherein a temperature of the contact portion in contact with the target object is obtained by the plurality of temperature sensors by detecting a temperature of the body portion.

FIG.1

FIG.2

FIG.3

FIG.4

## INTERNATIONAL SEARCH REPORT

| International application No. |
|---|
| **PCT/KR2023/021174** |

**A.    CLASSIFICATION OF SUBJECT MATTER**

**B29C 65/20**(2006.01)i; **H01M 50/105**(2021.01)i; **B29C 65/00**(2006.01)i; B29L 31/00(2006.01)n

According to International Patent Classification (IPC) or to both national classification and IPC

**B.    FIELDS SEARCHED**

Minimum documentation searched (classification system followed by classification symbols)

B29C 65/20(2006.01); B29C 65/00(2006.01); B29C 65/02(2006.01); B29L 31/34(2006.01); H01L 21/60(2006.01); H01M 50/10(2021.01); H05K 3/32(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전지(battery), 실링(sealing), 온도(temperature), 센서(sensor)

**C.    DOCUMENTS CONSIDERED TO BE RELEVANT**

| Category* | Citation of document, with indication, where appropriate, of the relevant passages | Relevant to claim No. |
|---|---|---|
| X | KR 10-2079737 B1 (BAE, Byung Chan et al.) 20 February 2020 (2020-02-20)<br>See claim 1; paragraphs [0036]-[0046]; and figures 1-5. | 1-5,8-13 |
| A | | 6,7 |
| X | KR 10-2022-0012617 A (LEE, Chang Hwan et al.) 04 February 2022 (2022-02-04)<br>See claim 1; and figure 3. | 1 |
| X | KR 10-2262422 B1 (CLEVER. CO., LTD.) 08 June 2021 (2021-06-08)<br>See claim 1; and figure 2. | 1 |
| X | JP 2000-277893 A (SEIKO EPSON CORP.) 06 October 2000 (2000-10-06)<br>See claim 1; and figure 3. | 1 |
| A | US 2004-0020913 A1 (HOVORKA, G. B.) 05 February 2004 (2004-02-05)<br>See entire document. | 1-13 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **01 April 2024** | **01 April 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/021174**

| Patent document cited in search report | | | Publication date (day/month/year) | Patent family member(s) | | | Publication date (day/month/year) |
|---|---|---|---|---|---|---|---|
| KR | 10-2079737 | B1 | 20 February 2020 | None | | | |
| KR | 10-2022-0012617 | A | 04 February 2022 | KR | 10-2364600 | B1 | 21 February 2022 |
| KR | 10-2262422 | B1 | 08 June 2021 | CN | 113396641 | A | 14 September 2021 |
| | | | | EP | 3904059 | A1 | 03 November 2021 |
| | | | | KR | 10-2021-0012986 | A | 03 February 2021 |
| | | | | US | 2022-0102783 | A1 | 31 March 2022 |
| | | | | WO | 2021-015589 | A1 | 28 January 2021 |
| JP | 2000-277893 | A | 06 October 2000 | None | | | |
| US | 2004-0020913 | A1 | 05 February 2004 | US | 6881929 | B2 | 19 April 2005 |

Form PCT/ISA/210 (patent family annex) (July 2022)

**EP 4 613 463 A1**

**Patent documents cited in the description**

- KR 1020220181898